Europäisches Patentamt

European Patent Office

Office européen des brevets

(19)

(11) Publication number: **0 157 716**
A1

(12) **EUROPEAN PATENT APPLICATION**

(21) Application number: **85630018.1**

(22) Date of filing: **26.02.85**

(51) Int. Cl.⁴: **B 60 C 9/00**

(30) Priority: **27.02.84 US 584206**

(43) Date of publication of application: **09.10.85**
Bulletin 85/41

(84) Designated Contracting States: **BE DE FR GB IT LU**

(71) Applicant: **THE GOODYEAR TIRE & RUBBER COMPANY**, 1144 East Market Street, Akron, Ohio 44316 (US)

(72) Inventor: **Oblath, Richard Michael**, 1404 Melanie Drive, Uniontown Ohio 44685 (US)
Inventor: **Fleming, Roger Alden**, 3865 Silverwood Drive, Stow Ohio 44224 (US)
Inventor: **Emerson, Roger Dale**, 47 Berkshire Court-1A, Akron Ohio 44313 (US)

(74) Representative: **Weyland, Joseph Jean Pierre**, Goodyear International Tire Technical Center Patent Department Avenue Gordon Smith, L-7750 Colmar-Berg (LU)

(54) **Flat wire reinforcement in tyre belt and carcass.**

(57) An article of manufacture for reinforcing a rubber article which comprises a cold worked flat steel wire (26) having a carbon content ranging from about .65% to .90%, a pearlitic microstructure before cold working, a tensile strength equal to or greater than $1526 \times 10^6$ N/m² ($2.2 \times 10^5$ psi) and an elongation at break ranging from 1.0% to 3.5%.

## THE USE OF FLAT WIRE AS A REINFORCEMENT
## IN THE BELT PACKAGE AND CARCASS OF A
## PASSENGER TIRE

### Background of the Invention

The present invention relates to a reinforcement for use in elastomeric articles and in particular the reinforcement of pneumatic tires.

Pneumatic tires, rubber hoses and other elastomeric articles are generally reinforced with cords having substantially round cross-sectional configurations. These cords either comprise a single filament or a plurality of filaments twisted together. It is also well-known that these cords can be made of steel.

There has been some attempt in the prior art, for example in U.S. Patent Nos. 4,011,899, 3,794,097 and 4,106,957, to specify flat wire as a reinforcement for pneumatic tires and other elastomeric products.

A pneumatic tire is a complex dynamic article of manufacture and requires that the reinforcing structure go through many repeating stress strain cycles throughout its life. Therefore, it is important that the cord be properly designed and have the appropriate strength and fatigue properties.

Applicants have discovered a structure having combination of features which provide sufficient strength for reinforcing rubber articles, yet has sufficient ductility to provide improved fatigue characteristics.

The use of flat wires as reinforcing elements in pneumatic tires provides the tire designer with the capability of designing tires having improved running temperatures, especially in the tread area of the tire, impact resistance, tread wear and other performance characteristics. However, in order to realize these benefits it is necessary that the wire have a particular physical structure. Applicants have discovered a particular combination of structural features for a flat wire reinforcement so as to enable it to be used as a reinforcement member in pneumatic tires.

## Description of the Drawings

Figure 1 is a perspective view of a portion of a flat wire reinforcement made in accordance with the present invention;

Figure 2 is a cross-section of a tire made in accordance with the present invention;

Figure 3 is a top view of a portion of the tire with a section removed to show the angular disposition of the flat wire reinforcing the tire.

## Detailed Description of the Invention

Referring more particularly to the drawings, there is illustrated a pneumatic passenger vehicle tire 10 having a ground-engaging tread portion 12 which merges into a pair of sidewalls 14 at each end thereof. The sidewalls 14 each extend radially inwardly and terminate in a bead portion 16 having a substantially inextensible annular reinforcing member 18 embedded therein. Extending from one bead portion 16 to the other bead portion 16 through the sidewalls 14 and tread portion 12 is a carcass reinforcing structure 20 having a pair of lateral ends 22 which are wrapped about the substantially inextensible annual reinforcing members 18. Disposed radially outwardly of the carcass 20 in the ground-engaging tread portion 12 is a belt reinforcing structure 24.

In the particular embodiment illustrated, the carcass reinforcing structure comprises a single layer of parallel flat wire reinforcements 26. The flat wire reinforcements 26 when used as a carcass reinforcing structure should be disposed at an angle of not less than 75° with respect to the mid-circumferential centerplane C-P, preferably of at least 85°. In the particular embodiment illustrated, the flat wire reinforcements 26 are oriented at substantially 90° with respect to the mid-circumferential centerplane C-P of the tire. The flat wire reinforcements when used as a carcass reinforcement should be at a density between 10 and 30 ends per 2.54 cm (1 inch) so as to provide a minimum carcass strength of at least $9.3 \times 10^6$ N/m$^2$ (1350 psi). The wire reinforcements 26 should not touch each other. The flat wire reinforcements should each have a cross-sectional shape such that the cross-sectional thickness X is greater than or equal to .127 mm (.005 inches) and less than or equal to .38 mm (.015 inches) [.127 mm $\leq$ X $\leq$ .38 mm]; and the width Y is greater than or equal to .254 mm (.010 inches) and less than or equal to 1.65 mm (.065 inches) [.254 mm $\leq$ Y $\leq$ 1.65 mm]. The cross-sectional shape of the reinforcement 26 should be such that the ratio of the width Y divided by the thickness X is greater than or equal to 2 and less than or equal to 15 [2 $\leq \dfrac{Y}{X} \leq$ 15].

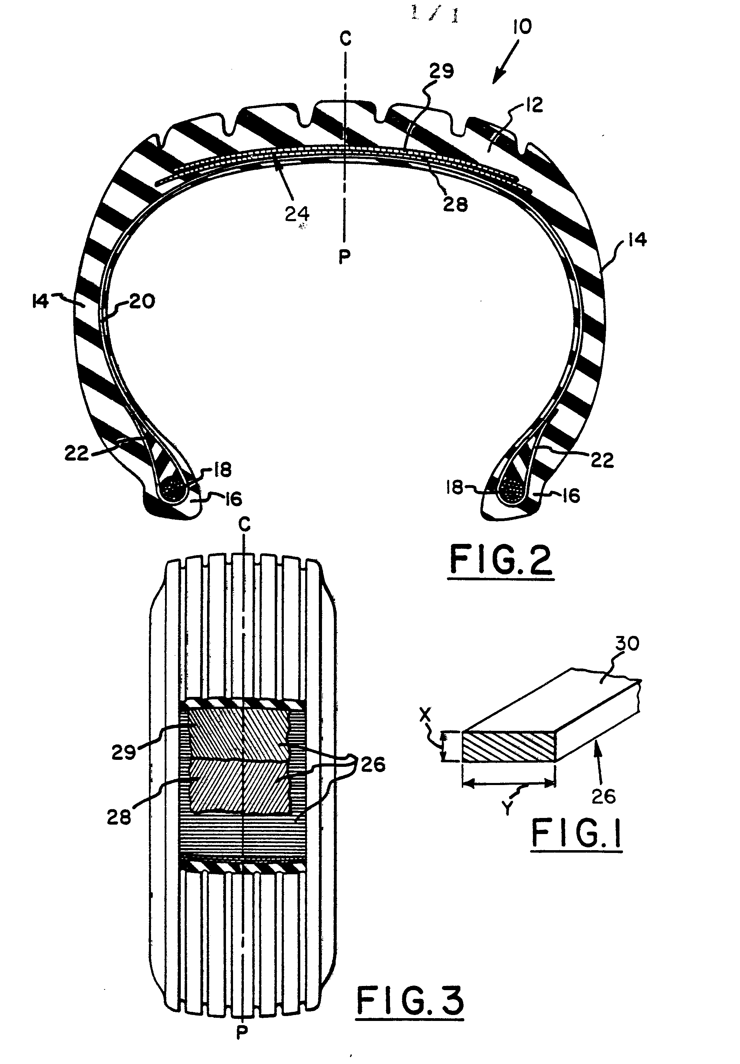

The belt reinforcing structure 24 comprises a radially inner reinforcing belt ply 28 and a radially outer reinforcing belt ply 29. The belts 28,29 each comprise a plurality of parallel flat wire reinforcements 26, each belt 28,29 having a density of wire reinforcements 26 of between 2 and 20 ends per 2.54 cm (1 inch). The belt reinforcing structure preferably provides a minimum belt strength of 16.5x $10^6$ N/m$^2$ (2400 psi). Here, as in the carcass structure, adjacent wire reinforcements should not touch each other. The cross-sectional shape of the wire reinforcements 26 when used as a belt reinforcement is such that the thickness X is greater than or equal to .178 mm (.007 inches) and less than or equal to .508 mm (.02 inches) [.178 mm $\leq$ X $\leq$ .508 mm] and has a width Y greater than or equal to 1.27 mm (.040 inches) and less than or equal to 5.08 mm (.20 inches) [1.27 mm $\leq$ Y $\leq$ 5.08 mm] and the ratio of the width Y to the thickness X is greater than or equal to 2 and less than or equal to 15 [2 $\leq$ $\frac{Y}{X}$ $\leq$ 15]. The wire reinforcements 26 in plies 28,29 are oriented generally between 0° and 45°, preferably between 15° and 40°, with respect to the mid-circumferential centerplane C-P and are oriented in generally opposite directions with respect to the mid-circumferential centerplane of the tire as illustrated in Fig. 3. The size of the wire reinforcements 26 in the carcass and belt reinforcement is important with respect to obtaining the ride, handling and spring rate desired, especially for a passenger vehicle tire as described herein.

It is important that the flat wire reinforcements used to reinforce elastomeric articles, and in particular a pneumatic tire as illustrated, be made of a cold worked steel which has a carbon content ranging from about .65% to .90%, a pearlitic microstructure before cold working, a tensile strength equal or greater than 1526 x $10^6$ N/m$^2$ (2.2 x $10^5$ psi) and an elongation at break ranging 1.0% to 3.5%. Applicants have found that it is important that the steel reinforcements have this structure so as to obtain the appropriate strength and fatigue qualities.

0157716

In order to further improve adhesion between the steel cord reinforcements 26 and the rubber in which it is to be embedded, there may be provided a coating 30 of copper, zinc or brass having a thickness of at least about .10 microns. Generally, coating 30 is not greater than about 100 microns, in the particular embodiment illustrated, coating 30 is about 20 microns. If a brass coating is used, it should have a copper content ranging from about 55% to 75%. If desired, the coating 30 may be doped with a third alloy such as iron, nickel, cadmium or cobalt in the range of 0.1% to 5.0% to further improve adhesion qualities of the wire with rubber.

While in the particular embodiment illustrated, the tire 10 is shown as having flat wire reinforcements 26 both in the carcass reinforcing structure 20 and the belt reinforcing structure 24, it may be desired to place the flat wire reinforcements 26 in only one of the foregoing structures. For example, if desired, a tire may be made with flat wire reinforcements 26 only in the belt reinforcing structure 24 in conjunction with a carcass reinforcing structure comprising normal reinforcing structures normally found in the prior art; for example, polyester or rayon cords. This particular combination of a fabric reinforced carcass structure and a reinforcing belt structure having flat steel wire reinforcing members can provide a significant improvement in tread wear and reduced heat generation in the belt area of the tire while maintaining or slightly improving other ride performance characteristics. For example, when a tire comprising a belt reinforcing structure 24 having flat wire reinforcements 26 made in accordance with the present invention, and a carcass having normal polyester cords of substantially round cross-sectional shape oriented at substantially 90° to the mid-circumferential centerplane of the tire, was compared to a tire comprising a conventional round wire reinforcing belt structure, the tread wear of the tire made in accordance with the present invention was improved by approximately 13%. Additionally, the temperatures in the shoulder areas of the tire, where the belt reinforcement ends, dropped to a temperature of 82° C to 88° C (180° F to 190° F) from a temperature of approximately 95° C (203° F) of a tire of the prior art. It is important that the temperature be kept as low as possible in the shoulder regions of a tire as this is the area where belt separation generally first occurs.

Likewise, it may also be desirable to construct a tire having a carcass reinforcing structure 20 comprising a flat wire reinforcement in accordance with the present invention wherein the reinforcing belt structure is of the type normally used in the prior art.

An important aspect of the present invention is that the material of the flat wire be of a particular composition, as previously set forth, and have a particular dimensional size relationship depending on its use in the carcass structure or in the belt reinforcing structure. It is this combination of features which enables a pneumatic tire comprising flat wire to obtain desireable performance characteristics.

It is understood that modifications to the present invention could be made without departing from the scope of the present invention. For example, the cross-sectional shape may be slightly varied by rounding the corners of the wire reinforcement. Additionally, the outer surface of the wire reinforcement may be provided with small indentations or grooves for better adhesion to the rubber.

CLAIMS

1. A cord (26) for reinforcing a rubber article comprising a cold worked flat steel wire characterized by a carbon content ranging from about .65% to .90%, a pearlitic microstructure before cold working, a tensile strength equal to or greater than $1526 \times 10^6$ $N/m^2$ and an elongation at break ranging from 1.0% to 3.5%.

2. A cord (26) according to claim 1 further characterized by said wire having a coating of zinc with a thickness of at least about .10 microns.

3. A cord (26) according to claim 1 further characterized by said wire having a coating of copper with a thickness of at least about .10 microns.

4. A cord (26) according to claim 1 further characterized by said wire having a coating of brass with a thickness of at least about .10 microns, said brass having a copper content ranging from about 55% to 75%.

5. A cord (26) according to claim 4 further characterized in that said coating includes a third alloy such as iron, nickel, cadmium, or cobalt with a content of said third alloy being in the range of 0.1% to 5.0%.

6. A tire (10) comprising a cord (26) as claimed in any one of the preceding claims characterized in that a belt reinforcing structure (24) of the tire comprises a plurality of said cords, said cords having a width (Y) in the range of 0.25 mm to 5.08 mm and a thickness (X) in the range of about 0.127 mm to .508 mm and the ratio of the width to thickness $\left(\frac{Y}{X}\right)$ being in the range of 2 to 15, the belt reinforcing structure (24) having a density in the range of 2 to 20 ends per 2.54 cm.

7. A tire (10) having a steel cord as claimed in any one of the preceding claims and also as claimed in claim 6 characterized in that a plurality of said cords are deployed in a carcass reinforcing structure (20) at an angle in the range of 70° to 90° with respect to the mid-circumferential centerplane (C-P) of the tire, said cords having a width (Y) in the range of from about .254 mm to 1.65 mm, a thickness (X) in the range of from about .127 mm to .38 mm and a ratio of width to thickness $\left(\frac{Y}{X}\right)$ in the range of 2 to 15, the carcass structure having a density between 10 to 30 ends per 2.54 cm.

8. A tire (10) as claimed in Claim 6, or Claim 7 when dependent upon Claim 6, characterized by said belt reinforcing structure (24) comprising at least one reinforcing belt ply (28,29) wrapped circumferentially around said carcass reinforcing structure (20) in the area of the tread (12), said belt ply (28,29) comprising a plurality of said cords disposed at an angle in the range of from about 10° to 45° measured with respect to the mid-circumferential centerplane (C-P) of the tire, said cords having a width in the range from about .254 mm to 1.65 mm, and a thickness in the range from about .127 mm to about .38 mm.

**FIG.2**

**FIG.1**

**FIG.3**

European Patent
Office

**EUROPEAN SEARCH REPORT**

0157716
Application number

EP 85 63 0018

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,D | US-A-4 011 899 (J.CHAMBERLIN)<br>* Column 8, line 45 - column 10, line 10; column 3, line 3 - line 38; lines 56-65; column 6, lines 1-5; figure 2 *<br>--- | 1,4,6 | B 60 C 9/00<br>B 60 C 9/20 |
| A,D | US-A-3 794 097 (G.KIND)<br>* Column 2, lines 21-30 *<br>--- | 6,8 | |
| A,D | LU-A- 65 981 (BEKAERT)<br>* Page 1, lines 6-25; page 2, lines 15-18; page 3, lines 1.-5; page 11; revendication 8 *<br>--- | 1,6 | |
| A | FR-A-2 082 137 (UNIROYAL) | | |
| | ----- | | **TECHNICAL FIELDS SEARCHED (Int. Cl.4)**<br><br>B 60 C |

The present search report has been drawn up for all claims

| Place of search | Date of completion of the search | Examiner |
|---|---|---|
| THE HAGUE | 20-06-1985 | SCHMITT L.P. |